# EUROPÄISCHE PATENTSCHRIFT

(11) **EP 1 351 481 B1**
(45) Veröffentlichungstag und Bekanntmachung des Hinweises auf die Patenterteilung: **23.02.2005**
(21) Anmeldenummer: 03100857.6
(22) Anmeldetag: 01.04.2003
(51) Int. Cl.: H04M 15/00, H04Q 3/00, H04Q 7/38, H04M 17/00, G06F 17/60, H04M 15/26, H04Q 7/34

(54) **Betriebsverfahren eines Kommunikationsnetzes und Anordnung zu dessen Durchführung**
Method of operating a communications network and apparatus for its realisation
Procédé d'exploitation d'un réseau de télécommunications et dispostif de réalisation

(30) Priorität: 04.04.2002 DE 10214928
(43) Veröffentlichungstag der Anmeldung: 08.10.2003
(73) Patentinhaber: SIEMENS AKTIENGESELLSCHAFT, 80333 München (DE)
(72) Erfinder: Pförtner, Thomas, 85635, Höhenkirchen (DE)

(56) Entgegenhaltungen:
- EP-A- 1 253 771
- EP-A- 1 261 192
- WO-A-03/025809

## Beschreibung

Die Erfindung betrifft ein Betriebsverfahren eines Kommunikationsnetzes (insbesondere Telefon-Festnetzes oder Mobilfunknetzes) nach dem Oberbegriff des Anspruchs 1. Sie betrifft weiterhin eine Anordnung bzw. Netzstruktur, die zur Durchführung dieses Verfahrens geeignet ist.

Bei den derzeit stattfindenden gesellschaftlichen Wandlungsprozessen von der Industrie- zur Informations- und Dienstleistungsgesellschaft kommt der Erweiterung der Nutzungsmöglichkeiten der Kommunikationsnetze zentrale Bedeutung zu. Dies erfordert auch erhebliche Investitionen in die Infrastruktur, die von den Betreibern seit Jahren auch getätigt werden. Die Unternehmen haben damit erhebliche finanzielle Belastungen auf sich genommen und sind nicht zuletzt hierdurch zu einer konsequenten und gleichwohl effizienten Risikosteuerung und -begrenzung auf der Einnahmeseite gezwungen.

Die Erweiterung der Angebotspaletten der Telekommunikationsanbieter um Datendienste und vor allem um Inhalte und Applikationen sowie die verstärkte Einbindung externer Inhaltsanbieter in Verallgemeinerung der Premium Rate Dienste (0190, 0900) lassen das Zahlungsrisiko einerseits deutlich anschwellen in bezug auf Volumen und Risikoklasse, andererseits wandelt es sich verstärkt in ein Inkassorisiko. Damit ergeben sich erhebliche betriebswirtschaftliche Auswirkungen auf die Telekommunikationsunternehmen.

Dem Management dieser Risiken muß daher verstärkt Aufmerksamkeit gewidmet werden. Es erfordert nach derzeitigem Erkenntnisstand ein grundsätzliches Überdenken der Abrechungsprozesse.

Die Vergebührung von Telekommunikationsdienstleistungen erfolgt im klassischen Abrechnungsprozess in Form von drei Teilprozessen, die unterschiedlich häufig zur Anwendung kommen:
- die Erfassung der Dienstenutzung in der Vermittlungsstelle oder anderen Netzelementen durch Erzeugung und Speicherung von Nutzungsdatensätzen (mindestens einmal pro Dienstenutzung, z.B. Telefongespräch),
- deren Erfassung und Bewertung mit dem Tarif und die Zuordnung zu einem Kundenkonto (mindestens einmal monatlich, u.U. auch öfter),
- eine Rechnungsstellung und Verfolgung der Zahlungseingänge (üblicherweise monatlich).

Damit ergibt sich bei Zugrundelegung typischer Zahlungs- und Mahnfristen für den Betreiber ein Risiko von mindestens zwei Monatsumsätzen.

Eine Reduzierung dieses Risikos kann beispielsweise dadurch erfolgen, dass man in kürzeren Abständen die Kontensalden ermittelt (was ein häufigeres Durchlaufen von Teilprozess 2 bedeutet) und diese mit kundenspezifischen Limits, den "Verfügungsrahmen", vergleicht, die aufgrund einer Bonitätseinschätzung der Kunden festgelegt werden.

Je weiter man diese Risikoreduzierung nun treiben will, d.h. je kürzer die Aktualisierungszyklen der Kontensalden werden, desto größer ist der Änderungsaufwand am Abrechnungssystem, bis hin zum notwendigen Komplettersatz. Dieser ist verbunden mit hohen Investitionskosten in das neue System und hohem Migrationsaufwand und -risiko, da alle bestehenden Kundenund Tarifdaten auf das neue System übertragen werden müssen und jeder Systemausfall zu Einnahmeausfällen führen kann. Schließlich ergeben sich hohe Betriebskosten, da alle Vergebührungstatbestände über das aufwändigere neue System verarbeitet werden müssen.

Der Erfindung liegt daher die Aufgabe zugrunde, ein verbessertes, mit geringerem Aufwand und Migrationsrisiko als die bekannten Verfahren verbundenes Betriebsverfahren eines Kommunikationsnetzes bereitzustellen, mit dem das Zahlungs- und Inkassorisiko wesentlich verringert werden kann. Desweiteren besteht die Aufgabe, eine zur Durchführung dieses Verfahrens geeignete Anordnung anzugeben.

Diese Aufgabe wird in ihrem Verfahrensaspekt durch ein Verfahren mit den Merkmalen des Anspruchs 1 und in ihrem Vorrichtungsaspekt durch eine Anordnung mit den Merkmalen des Anspruchs 11 gelöst.

Die beschriebene Erfindung geht nicht den Weg, den Abrechnungsprozess durch Beschleunigung der Saldenermittlung bei gleichzeitig steigenden Kosten schrittweise zu verbessern. Statt dessen wird dem bestehenden Abrechnungsprozess ein spezielles Betriebsverfahren - nachfolgend auch bezeichnet als Real-Time-Paymentprozess (RT-Paymentprozess) - überlagert, welcher das Risiko nicht graduell reduziert, sondern prinzipbedingt eliminiert. Dieser neue Prozess ist an den heute bei sogenannten Prepaid-Systemen eingesetzten angelehnt. Hier wird vor Erbringung der kostenpflichtigen Leistung (z.B. Aufbau einer Verbindung) das vorhandene Budget überprüft und nur bei positivem Prüfergebnis die Leistung erbracht. Ein Zahlungsrisiko ist damit nicht mehr vorhanden. Durch eine ständige Prüfung des aktuellen Restbudgets wird ein Überziehen des Budgets sicher vermieden.

Bezogen auf sogenannte Vertragskunden mit nachträglicher Rechnungsstellung der zuvor in Anspruch genommenen Leistung heißt das: Prüfung des Verfügungsrahmens vor jeder neuen Leistungserbringung. Das Risiko über den gewährten Verfügungsrahmen hinaus wird also nicht minimiert durch Begrenzung auf den Wert der innerhalb eines beliebig kurzen Zeitraums möglichen Transaktionen, sondern es wird durch die Umkehrung der Teilschritte prinzipiell eliminiert.

Durch selektive Anwendung des jeweils situationsabhängig sinnvollen Prozesses (klassischer Abrechnungsprozess oder "RT-Paymentprozess") wird gleichzeitig eine Maximierung der Risikokontrolle und eine Minimierung der entstehenden Kosten erreicht. Das etablierte Abrechnungssystem kann ohne jede Verkürzung der Aktualisierungszyklen bestehen bleiben, inklusive aller Kundendaten. Damit gibt es keinen Migrationsaufwand und vor allem kein Migrationsrisiko.

Durch eine entsprechende Steuerung wird der "RT-Paymentprozess" dann und nur dann aktiviert, wenn der Rechnungsstand eines Kunden sich in der Nähe seines individuellen Verfügungslimits befindet. Dazu wird eine zusätzliche Schwelle (Risikogrenze) definiert und kundenspezifisch festgelegt.

Wird durch Zahlungseingang der offene Saldo reduziert, kann wieder auf das klassische Abrechnungsverfahren zurückgegangen werden. In dem RT-Paymentprozeß befinden sich daher nur einige wenige Kunden und auch diese nur temporär.

Da nicht alle Rechnungen eines Betreibers zum Monatsletzten erstellt werden, sondern die Rechnungsläufe für alle Kunden über den Monat verteilt werden ist auch eine gleichmäßige Belegung des RT-Paymentsystems zu erwarten. D.h. es ist zu dessen Betrieb in Relation zur Gesamtkundenzahl nur eine relativ geringe Kapazität notwendig. Damit reduziert sich das Anfangsinvestment gegenüber den bekannten Lösungen deutlich.

Durch Auswertung der Kundenhistorien (z.B. in einer CRM Applikation) wird zunächst festgelegt, bei welchen Kunden ein Zahlungsrisiko besteht und ab welcher Höhe dies einer speziellen Kontrollprozedur unterworfen werden soll. In einem zusätzlichen Prozessschritt im Rahmen der Kontenaktualisierung oder der Rechnungstellung des "klassischen" Abrechnungssystems werden diese Risikogrenzen nun mit den aktuellen Salden verglichen und gegebenenfalls eine temporäre Verarbeitung durch das "RT-Paymentsystem" veranlasst bzw. beendet.

Bei Mobilfunknetzen (GSM) kann dies durch Rücksetzen des Service Class Mark Flags im HLR und Einrichten bzw. Löschen des Kunden im SCP erfolgen. Bei Festnetzen müssen für alle Anschlüsse leitungsbasierte Trigger in den SSPs eingerichtet und zunächst deaktiviert werden. Der Übergang eines Kunden in das "RT-Paymentsystem" bzw. zurück erfolgt dann durch Einrichten der Kundendaten und Aktivierung des Triggers.

Bei diesem Übergang auf das "RT-Paymentsystem" müssen der Kontostand des letzten Rechnungslaufes sowie zusätzlich, falls dies zu einem Zeitpunkt geschieht, der nicht dem des Rechnungslaufes entspricht, alle seitdem angefallenen Nutzungsdaten transferiert und die Kundendaten mit dem daraus errechneten aktuellen Kontostand initialisiert werden.

Die Teilschritte müssen dabei einer Transaktionskontrolle unterliegen und in einer geeigneten Reihenfolge erfolgen, so dass eine Erfassung aller Nutzungsfälle garantiert werden kann.

Die Erfassung der Transaktionen auf dem RT-Paymentsystem beinhaltet dann eine Prüfung der jeweiligen Limits für jede Transaktion, wie eingangs beschrieben, die Aktualisierung des Kontostandes und die Generierung der Daten für das Ausgangs-Abrechungssystem zur Vermeidung einer doppelten Tariffierung. Die originären Tickets der Netzelemente können anschließend gelöscht werden.

Der nachfolgende Rechnungslauf erfolgt dann weiterhin auf dem Ausgangs-Abrechnungssystem. Der online geführte Saldo auf dem RT-Paymentsystem dient zunächst nur der Gewährung bzw. Nichtgewährung von Nutzungswünschen des Kunden.

Je nach Detaillösung kann der neue Teilprozess der Kontoüberwachung als zusätzlicher Teilprozess installiert werden. Das heißt die Gebührenerfassung läuft unverändert weiter und ist nach wie vor die Basis der Rechnungsstellung.

Alternativ kann dieser neue Teilprozess die Gebührenermittlung aber auch ersetzen. Das heisst, die Datensätze des Netzelements werden verworfen (z.B. im Teilschritt "Filtern/Korellieren"). Der Teilprozess Rechnungsstellung greift dann für den beroffenen Zeitraum auf die Daten und den Kontostand aus dem RT-System zurück. Das Einrichten bzw. Löschen der Datenstrukturen pro Kunde kann dann über einen separaten Prozess gesteuert werden.

Es mag Kunden geben, deren Abrechnungen regelmäßig zum Monatsende über das "RT-Paymentsystem" verarbeitet werden, so dass das Anlegen und Löschen der Kundendaten sinnvollerweise vermieden wird. Ebenso kann es sinnvoll sein, einzelne Kunden dauerhaft auf das "RT-Paymentsystem" zu migrieren.

Zur Erläuterung der Erfindung wird im übrigen auf die anhängenden Figuren verwiesen. Von diesen zeigen:
Fig. 1 eine schematische Darstellung eines herkömmlichen Abrechnungsprozesses für Telekommunikations-Dienstleistungen gemäß dem oben beschriebenen Verfahren in Art eines (mehrteiligen) Flussdiagramms,
Fig. 2 eine an Fig. 1 angelehnte schematische Darstellung zur Erläuterung eines erfindungsgemäß modifizierten Abrechnungsprozesses,
Fig. 3 ein vereinfachtes Flussdiagramm des oben erwähnten "RT-Paymentprozesses" gemäß einer Ausführung der Erfindung,
Fig. 4 eine Prinzipskizze einer Ausführungsform des erfindungsgemäßen Systems und
Fig. 5 ein schematisches Funktions-Blockschaltbild eines Ausführungsbeispiels der Anordnung zur Durchführung des vorgeschlagenen Verfahrens.

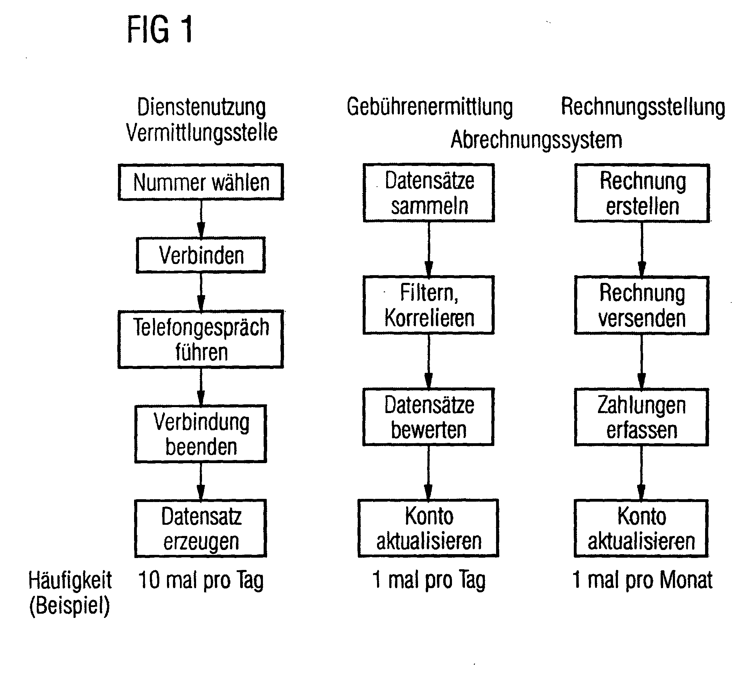

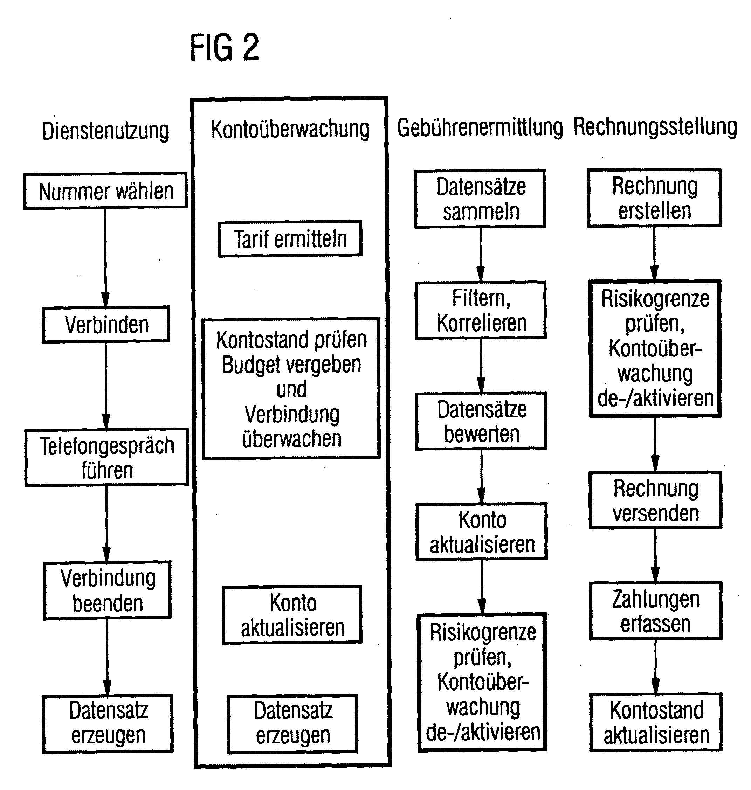

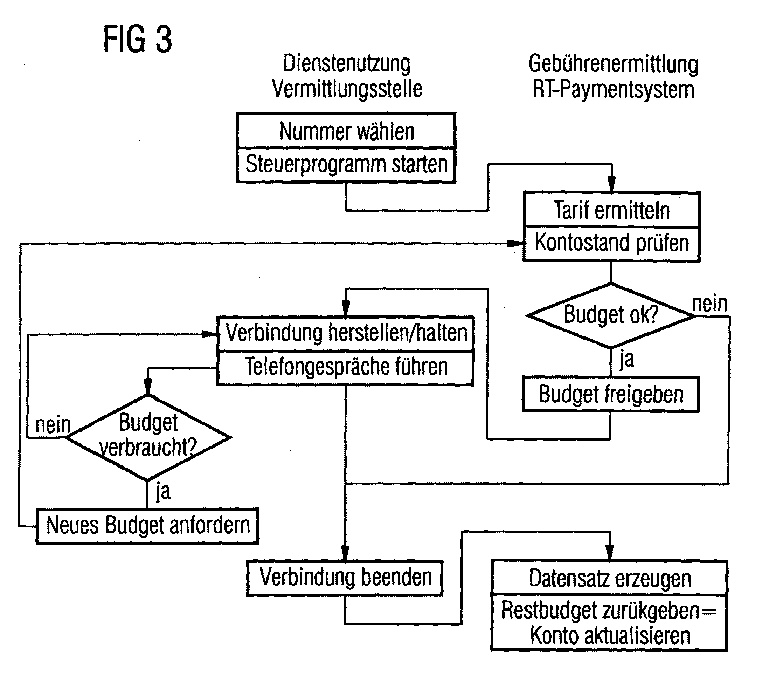

Die Figuren 1 bis 3 sind aufgrund der Beschriftung und unter Beachtung der obigen allgemeinen Erläuterungen zum vorgeschlagenen Verfahren im wesentlichen selbsterklärend, so dass hier auf eine zusätzliche verbale Beschreibung verzichtet wird.

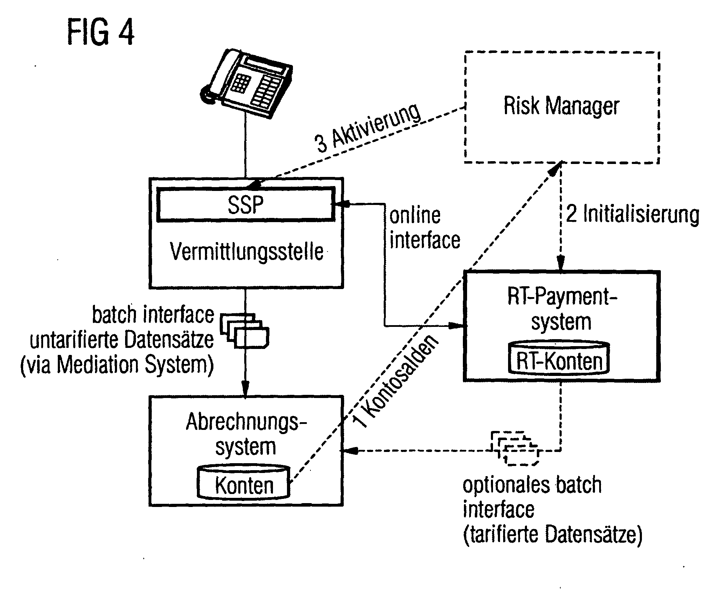

Fig. 4 zeigt eine synoptische Darstellung aus einer bevorzugten Systemstruktur und den Teilprozessen (1) Kontosalden, (2) Initialisierung und (3) Aktivierung des "RT-Paymentsystems". Gemäß dieser Darstellung erfolgt die Gesamtprozesssteuerung durch einen hier als Risk Manager bezeichneten Server bzw. eine Applikation, die zentral in einem Telekommunikationsnetz implementiert ist, an das das in der Figur beispielhaft dargestellte Endgerät angeschlossen ist und zu der die Vermittlungsstelle bzw. der Dienstvermittlungsknoten SSP gehören. Das herkömmliche Abrechnungssystem und das "RT-Paymentsystem" sind hier - jeweils mit zugeordneten separaten Konten-Datenbasen - als relativ selbständige Funktionalitäten dargestellt. Es versteht sich jedoch aus den obigen allgemeinen Ausführungen, dass das "RT-Paymentsystem" auf das herkömmliche Abrechnungssystem aufsetzt und dieses kundenspezifisch ergänzt.

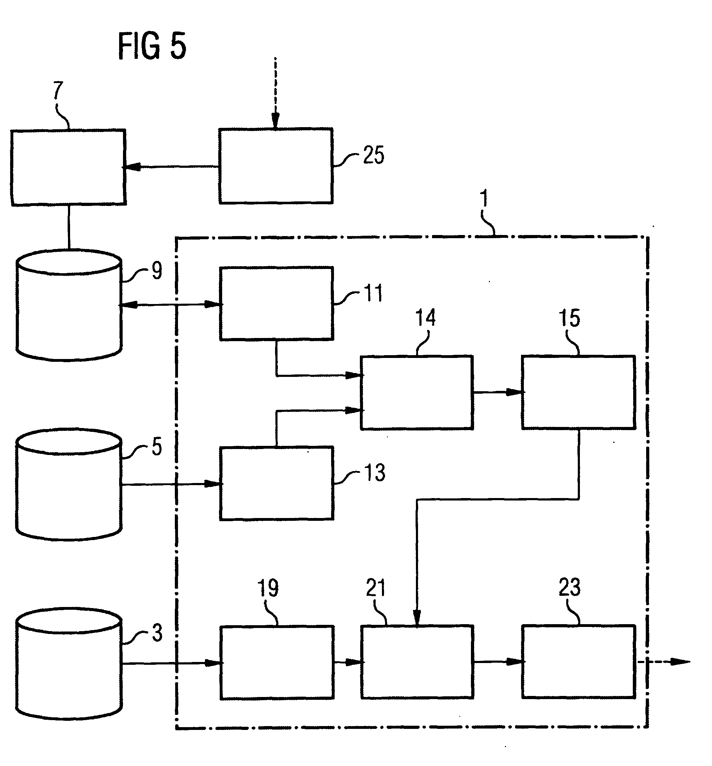

Fig. 5 zeigt in Art eines Funktions-Blockschaltbildes die wesentlichen Funktionseinheiten einer "RT-Payment"-Anordnung 1 zur Durchführung des erfindungsgemäßen Verfahrens. Die Anordnung umfasst eine Tarifdatenbasis 3 des betreffenden (nicht dargestellten) Kommunikationsnetzes, eine Nutzerprofil-Datenbasis 5 zur Speicherung von Teilnehmerdatensätzen, die u.a. einen Kreditrahmenwert repräsentierende Daten umfassen, sowie eine einem Kontenserver 7 zugeordnete Kontenstands-Datenbasis 9.

Auf dem Kontenserver 7 laufen unter Zugriff auf die Kontenstands-Datenbasis die einzelnen Teilprozesse und -schritte eines herkömmlichen Abrechnungsverfahrens für über das Telekommunikationsnetz erbrachte Dienstleistungen. Die Kontenstands-Datenbasis 9 stellt aber überdies die jeweils aktuellen Kontostände derjenigen Teilnehmer für die "RT-Payment"-Anordnung 1 bereit, für die aktuell der "RT-Paymentprozess" angewandt wird.

Zur Überwachung der entsprechenden Kontostände hat die Anordnung 1 eine Kontostands-Erfassungseinheit 11, und mit der Nutzerprofil-Datenbasis 5 ist als ein anordnungseigener Zwischenspeicher ein Kreditrahmenspeicher 13 verbunden, der zusammen mit der Kontostands-Erfassungseinheit 11 und einer Restanteil-Berechnungseinheit 14 eine Kreditwert-Erzeugungseinheit 15, zur Berechnung des für die mit der Anordnung 1 "verwalteten" Nutzer geltenden Kreditwerte anhand ihres jeweiligen Kreditrahmenwertes und aktuellen Kontostandes bildet. Die Kreditwert-Erzeugungseinheit 15 ist mit einem Kreditwertspeicher 17 verbunden, der wiederum als Zwischenspeicher zur Ablage der aktuell errechneten Kreditwerte der einzelnen Teilnehmer dient.

Die Tarifdatenbasis 3 ist mit dem Eingang einer Berechnungseinheit 19 zur Berechnung von Kostenschätzwerten für durch den Teilnehmer abgeforderte Dienstleistungen aufgrund der gespeicherten Tarifdaten des Kommunikationsnetzes verbunden. Mit dem Kreditwertspeicher 17 einerseits und der Berechnungseinheit 19 andererseits ist eine Vergleichereinheit 21 zum Vergleich der ermittelten Kostenschätzwerte mit den aktuell gültigen Kreditwerten und zur Ausgabe eines entsprechenden Prüfsignals verbunden. Mit dem Ausgang der Vergleichereinheit 21 schließlich ist eine Dienstleistungs-Steuereinheit 23 zur Triggerung oder Sperrung der angeforderten Dienstleistung in Reaktion auf das Ergebnis des Vergleiches zwischen Kostenschätzwert und Kreditwert verbunden.

Mit dem Kontenserver 7 des herkömmlichen Abrechnungssystem ist im übrigen ein weiterer Kontenserver 25 eines "aufgesetzten" Prepaid-Vergebührungssystems verbunden, über den per elektronischer Übertragung eines entsprechenden Guthabens nahezu in Echtzeit der Kontostand auf dem Account des jeweiligen Teilnehmers erhöht werden kann. Jede derartige Veränderung wird in der Kontenstands-Datenbasis 9 vermerkt und durch die Kontostands-Erfassungseinheit 11 erfasst, und die Komponenten Kreditrahmenspeicher 13 und Restanteil-Berechnungseinheit 14 beliefern einen entsprechend geänderten Kreditwert, der der Vergleichereinheit 21 zugeführt wird und im Normalfall zur Ausgabe eines positiven Prüfsignals durch diese und somit zur Triggerung der Erbringung der Dienstleistung führen wird.

Die Ausführung der Erfindung ist nicht auf die oben hervorgehobenen Aspekte und beschriebenen Ausführungsbeispiele beschränkt, sondern ebenso in einer Vielzahl von Abwandlungen möglich, die im Rahmen fachmännischen Handelns liegen. Insbesondere ist die beispielhaft beschriebene Anordnung - die in der Praxis natürlich als Kombination aus Soft- und Hardwarekomponenten realisiert sein wird - vielfältig variierbar und ausbaufähig, ohne dass der Bereich der Erfindung verlassen würde.

## Patentansprüche

1. Betriebsverfahren eines Kommunikationsnetzes zur Erbringung einer kostenpflichtigen Dienstleistung an einen Teilnehmer über einen diesem zugeordneten Netzanschluss bzw. eine Netzadresse, wobei eine Abrechnung der Dienstleistungskosten nachträglich mittels einer für einen vorbestimmten Zeitraum der Dienstnutzung an dem Netzanschluss erstellten, insbesondere eine Mehrzahl einzelner Dienstleistungen erfassenden, Sammelrechnung erfolgt,
**dadurch gekennzeichnet, dass**
(1) im Ansprechen auf den Empfang eines eine ausgewählte Dienstleistung spezifizierenden, über ein an den Netzanschluss angeschlossenes Kommunikationsendgerät ausgesandten Datensatzes in einer Dienststeuerzentrale des Kommunikationsnetzes aufgrund vorgespeicherter Tarifdaten ein Kostenschätzwert erstellt,
(2) der Kostenschätzwert mit einem Kreditwert verglichen und
(3) im Ansprechen auf ein das Vergleichsergebnis kennzeichnendes Prüfsignal die Erbringung der Dienstleistung getriggert oder gesperrt wird.

2. Betriebsverfahren nach Anspruch 1,
**dadurch gekennzeichnet, dass**
vor den Schritten (1) bis (3) im Ansprechen auf den Empfang des Datensatzes geprüft wird, ob für den Netzanschluss oder die Netzadresse ein Kreditwert vorliegt, und bei Nichtvorliegen die Erbringung der Dienstleistung direkt getriggert wird.

3. Betriebsverfahren nach Anspruch 1 oder 2,
**dadurch gekennzeichnet, dass**
der Kreditwert einen absoluten Geldbetrag repräsentiert.

4. Betriebsverfahren nach Anspruch 1 oder 2,
**dadurch gekennzeichnet, dass**
der Kreditwert einen festen Restanteil eines vorbestimmten Kreditrahmenwertes repräsentiert und generiert wird, sobald der Kreditrahmenwert durch Inanspruchnahme von Dienstleistungen über den Netzanschluss bzw. die Netzadresse bis auf den Restanteil aufgebraucht ist.

5. Betriebsverfahren nach einem der vorangehenden Ansprüche,
**dadurch gekennzeichnet, dass**
eine Dienstleistung mit vergebührungszeit- oder datenmengenabhängigen Kosten in Teilleistungen untergliedert wird, denen jeweils separate Kostenschätzwerte zuordenbar sind, und die Schritte (1) bis (3) für jede der Teilleistungen wiederholt werden.

6. Betriebsverfahren nach einem der vorangehenden Ansprüche,
**dadurch gekennzeichnet, dass**
nach Schritt (3) im Falle der Sperrung der Erbringung der Dienstleistung an das Kommunikationsendgerät eine das negative Vergleichsergebnis kennzeichnende Nachricht übermittelt wird.

7. Betriebsverfahren nach einem der vorangehenden Ansprüche,
**dadurch gekennzeichnet, dass**
das Kommunikationsnetz als Telefon-Festnetz oder Mobilfunknetz und das Kommunikationsendgerät als Telekommunikations-Endgerät ausgebildet ist.

8. Betriebsverfahren nach einem der vorangehenden Ansprüche,
**dadurch gekennzeichnet, dass**
denjenigen Netzanschlüssen, für die ein Kostenschätzwert generiert wird, ein Account eines Prepaid-Vergebührungssystems zugeordnet wird, der durch den Teilnehmer elektronisch aufgefüllt werden kann.

9. Betriebsverfahren nach Anspruch 8,
**dadurch gekennzeichnet, dass**
der Account des Prepaid-Vergebührungssystems über das Kommunikationsnetz zur Auffüllung zugreifbar ist.

10. Betriebsverfahren nach einem der vorangehenden Ansprüche,
**dadurch gekennzeichnet, dass**
eine Umschaltung auf eine Betriebsweise mit den Schritten (1) bis (3), ausgehend von einem auf der nachträglichen Erstellung von Sammelrechnungen basierenden Abrechnungsbetrieb, bei Unterschreitung des Kreditwertes ausgeführt wird.

11. Anordnung zur Durchführung des Betriebsverfahrens nach einem der vorangehenden Ansprüche,
**gekennzeichnet durch**
eine Abrechnungsart-Steuereinheit (Risk Manager) zur Umschaltung zwischen einem auf der Erstellung der Sammelrechnung basierenden Betriebsverfahren und einem Betriebsverfahren mit den Schritten (1) bis (3) bei Überschreitung des Kreditwertes.

12. Anordnung nach Anspruch 11,
**gekennzeichnet durch**
eine Berechnungseinheit zur Berechnung des Kostenschätzwertes, die insbesondere mit einer Tarifdatenbasis zur Speicherung von Tarifdaten des Kommunikationsnetzes verbunden ist, einen Kreditwertspeicher zur Speicherung des dem Netzanschluss zugeordneten Kreditwertes,
eine mit der Berechnungseinheit und dem Kreditwertspeicher verbundene Vergleichereinheit zum Vergleich des Kostenschätzwertes mit dem Kreditwert und zur Ausgabe des Prüfsignals im Ergebnis des Vergleiches und
eine mit dem Ausgang der Vergleichereinheit verbundene Dienstleistungs-Steuereinheit zur Triggerung oder Sperrung der Dienstleistung,
die insbesondere einer Dienststeuerzentrale zugeordnet sind.

13. Anordnung nach Anspruch 12,
**dadurch gekennzeichnet, dass**
dem Kreditwertspeicher eine Kreditwert-Erzeugungseinheit zugeordnet ist, die einen Kreditrahmenspeicher, eine Kontostands-Erfassungseinheit und eine mit diesen verbundene Restanteil-Berechnungseinheit zur Berechnung des Kreditwertes anhand des Kreditrahmenwertes und des aktuellen Kontostandes eines dem Netzanschluss zugeordneten Accounts aufweist.

14. Anordnung nach Anspruch 12 oder 13,
**dadurch gekennzeichnet, dass**
das Kommunikationsnetz als Telefon-Festnetz bzw. Mobilfunknetz ausgebildet ist und die Anordnung im Dienststeuerknoten des jeweiligen Netzanschlusses implementiert ist.

15. Anordnung nach einem der Ansprüche 11 bis 14,
**gekennzeichnet durch**
mindestens einen Kontenserver zur Steuerung (a) eines Abrechnungssystems mit nachträglicher Rechnungstellung und (b) eines Prepaid-Vergebührungssystems, wobei der oder die Kontenserver mindestens einen Kontostandsspeicher aufweist bzw. aufweisen.

## Claims

1. Operating method for a communication network for providing a chargeable service to a subscriber via a network connection or network address assigned to said subscriber, in which service costs are billed subsequently by means of a collective invoice produced for a specific period of service usage at the network connection, in particular covering a number of individual services,
**characterised in that**
(1) in response to receipt of a record specifying a selected service, sent via a communication terminal connected to the network connection, an estimated cost value is calculated in a service control centre of the communication network based on pre-stored tariff data,
(2) the estimated cost value is compared with a credit value and
(3) provision of the service is triggered or blocked in response to a verification signal signifying the result of the comparison.

2. Operating method according to Claim 1,
**characterised in that** before stages (1) to (3) in response to receipt of the record, it is verified whether there is a credit value for the network connection or the network address and if there is not, provision of the service is triggered immediately.

3. Operating method according to Claim 1 or 2,
**characterised in that** the credit value represents an absolute monetary sum.

4. Operating method according to Claim 1 or 2,
**characterised in that** the credit value represents a fixed residual balance of a pre-defined credit limit and is generated as soon as the credit limit is used up except for the residual balance by usage of services via the network connection or the network address.

5. Operating method according to one of the preceding Claims,
**characterised in that** a service with costs based on chargeable time or data quantities is subdivided into sub-services, to each of which separate estimated cost values can be assigned, and stages (1) to (3) are repeated for each of the sub-services.

6. Operating method according to one of the preceding Claims,
**characterised in that** after stage (3) in the event of blockage of provision of the service a message signifying the negative comparison result is sent to the communication terminal.

7. Operating method according to one of the preceding Claims,
**characterised in that** the communication network is configured as a fixed telephone network or mobile telephone network and the communication terminal as a telecommunication terminal.

8. Operating method according to one of the preceding Claims,
**characterised in that** those network connections, for which an estimated cost value is generated, are assigned a prepaid charging system account, which can be topped up electronically by the subscriber.

9. Operating method according to Claim 8,
**characterised in that** the prepaid charging system account can be accessed for top-up via the communication network.

10. Operating method according to one of the preceding Claims,
**characterised in that** a switch is carried out to an operating mode with the stages (1) to (3), from an accounting operation based on the subsequent production of collective invoices, when the value falls below the credit value.

11. Arrangement for implementing the operating method according to one of the preceding Claims,
**characterised by** an accounting type control unit (risk manager) to switch between an operating method based on the production of collective invoices and an operating method with the stages (1) to (3) when the credit value is exceeded.

12. Arrangement according to Claim 11,
**characterised by**
a calculation unit to calculate the estimated cost value, which in particular is connected to a tariff database for storing communication network tariff data,
a credit value storage unit to store the credit value assigned to the network connection,
a comparison unit connected to the calculation unit and the credit value storage unit to compare the estimated cost value with the credit value and to output the verification signal in the result of the comparison and
a service control unit connected to the output of the comparison unit to trigger or block the service,
which are in particular assigned to a service control centre.

13. Arrangement according to Claim 12,
**characterised in that** a credit value generation unit is assigned to the credit value storage unit, having a credit limit storage unit, an account status recording unit and a residual balance calculation unit connected to these to calculate the credit value on the basis of the credit limit value and the updated account status of an account assigned to the network connection.

14. Arrangement according to Claim 12 or 13,
**characterised in that** the communication network is configured as a fixed telephone network or a mobile telephone network and the arrangement is implemented in the service control points of the relevant network connection.

15. Arrangement according to one of Claims 11 to 14,
**characterised by** at least one account server to control (a) an accounting system with subsequent billing and (b) a prepaid charging arrangement, in which the account server(s) has or have at least one account status storage unit.

## Revendications

1. Procédé d'exploitation d'un réseau de communication pour l'accomplissement d'une prestation de service assujettie à paiement en faveur d'un abonné par le biais d'une connexion de réseau resp. adresse de réseau associée à celui-ci, un règlement des coûts de prestations de service ayant lieu ultérieurement au moyen d'une facture groupée qui saisit des prestations de service effectuées sur la connexion de réseau pour une période prédéterminée d'utilisation des services, notamment une pluralité de prestations de service individuelles,
**caractérisé en ce que**
(1) une valeur estimative de coût est produite dans une centrale de commande de services du réseau de communication, sur la base de données tarifaires pré-enregistrées, en réponse à la réception d'un jeu de données spécifiant une prestation de service sélectionnée et envoyé par un terminal de communication relié à la connexion de réseau,
(2) la valeur estimative de coût est comparée à une valeur de crédit et
(3) l'accomplissement de la prestation de service est déclenché ou bloqué en réponse à un signal de vérification caractérisant le résultat de la comparaison.

2. Procédé d'exploitation selon la revendication 1,
**caractérisé en ce que**,
avant les étapes (1) à (3), on vérifie, en réponse à la réception du jeu de données, si une valeur de crédit existe pour la connexion de réseau ou l'adresse de réseau et, en cas d'absence d'une valeur de crédit, l'accomplissement de la prestation de service est directement déclenché.

3. Procédé d'exploitation selon la revendication 1 ou 2,
**caractérisé en ce que**
la valeur de crédit représente une valeur monétaire absolue.

4. Procédé d'exploitation selon la revendication 1 ou 2,
**caractérisé en ce que**
la valeur de crédit représente une fraction restante fixe d'une valeur limite de crédit prédéterminée et est générée dès que la valeur limite de crédit est épuisée, à l'exception de la fraction restante, suite à la prise en compte de prestations de service sur la connexion de réseau resp. l'adresse de réseau.

5. Procédé d'exploitation selon l'une des revendications précédentes,
**caractérisé en ce**
**qu'**une prestation de service dont les coûts dépendent du temps de taxation ou de la quantité de données est divisée en prestations partielles auxquelles des valeurs estimatives de coût séparées peuvent être affectées à chaque fois et les étapes (1) à (3) sont répétées pour chacune des prestations partielles.

6. Procédé d'exploitation selon l'une des revendications précédentes,
**caractérisé en ce que**,
après l'étape (3), un message caractérisant le résultat négatif de la comparaison est transmis au terminal de communication en cas de blocage de l'accomplissement de la prestation de service.

7. Procédé d'exploitation selon l'une des revendications précédentes,
**caractérisé en ce que**
le réseau de communication est exécuté en tant que réseau de téléphonie fixe ou réseau de radiotéléphonie mobile et le terminal de communication est exécuté en tant que terminal de télécommunications.

8. Procédé d'exploitation selon l'une des revendications précédentes,
**caractérisé en ce**
**qu'**on attribue aux connexions de réseau pour lesquelles une valeur estimative de coût est générée un compte d'un système de taxation prépayée qui peut être rempli électroniquement par l'abonné.

9. Procédé d'exploitation selon la revendication 8,
**caractérisé en ce que**
l'accès au compte du système de taxation prépayée est possible par le biais du réseau de communication pour remplir le compte.

10. Procédé d'exploitation selon l'une des revendications précédentes,
**caractérisé en ce que**,
en cas de passage sous le seuil de la valeur de crédit, une commutation sur un mode d'exploitation comprenant les étapes (1) à (3) s'effectue à partir d'un mode de règlement basé sur l'établissement ultérieur de factures groupées.

11. Dispositif pour l'exécution du procédé d'exploitation selon l'une des revendications précédentes,
**caractérisé par**
une unité de commande du type de règlement (Risk Manager) pour la commutation entre un procédé d'exploitation basé sur l'établissement de la facture groupée et un procédé d'exploitation comprenant les étapes (1) à (3) en cas de dépassement de la valeur de crédit.

12. Dispositif selon la revendication 11,
**caractérisé par**
une unité de calcul pour le calcul de la valeur estimative de coût qui est reliée, notamment, à une base de données de tarifs pour l'enregistrement de données tarifaires du réseau de communication,
une mémoire de valeur de crédit pour l'enregistrement de la valeur de crédit associée à la connexion de réseau,
une unité comparatrice reliée à l'unité de calcul et à la mémoire de valeur de crédit, pour comparer la valeur estimative de coût et la valeur de crédit et pour émettre le signal de vérification résultant de la comparaison, et
une unité de commande de prestations de service reliée à la sortie de l'unité comparatrice, pour déclencher ou bloquer la prestation de service,
qui est associée notamment à une centrale de commande de services.

13. Dispositif selon la revendication 12,
**caractérisé en ce que**
l'on associe à la mémoire de valeur de crédit une unité de production de valeur de crédit qui comprend une mémoire de limite de crédit, une unité de saisie d'états de comptes et une unité de calcul de fraction restante reliée aux deux précédentes pour le calcul de la valeur de crédit sur la base de la valeur limite de crédit et de l'état de compte actuel d'un compte associé à la connexion de réseau.

14. Dispositif selon la revendication 12 ou 13,
**caractérisé en ce que**
le réseau de communication est exécuté en tant que réseau de téléphonie fixe resp. réseau de radiotéléphonie mobile et le dispositif est mis en oeuvre dans le noeud de commande de services de la connexion de réseau respective.

15. Dispositif selon l'une des revendications 11 à 14,
**caractérisé par**
au moins un serveur de comptes pour commander (a) un système de règlement avec facturation ultérieure et (b) un système de taxation prépayée, le ou les serveur(s) de comptes comprenant au moins une mémoire d'états de comptes.
